(19) Europäisches Patentamt

European Patent Office

Office européen des brevets

(11) **EP 4 675 499 A1**

(12) **EUROPEAN PATENT APPLICATION**

(43) Date of publication:
**07.01.2026 Bulletin 2026/02**

(21) Application number: **25182224.3**

(22) Date of filing: **12.06.2025**

(51) International Patent Classification (IPC):
**G06N 3/0455** (2023.01)    **G06N 3/0464** (2023.01)
**G06N 3/0895** (2023.01)    **G06N 3/09** (2023.01)
**G06V 10/82** (2022.01)    **G06V 20/56** (2022.01)

(52) Cooperative Patent Classification (CPC):
**G06N 3/0464; G06N 3/0455; G06N 3/0895;
G06N 3/09; G06V 10/82; G06V 20/56; G06V 20/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.07.2024 CN 202410895002**

(71) Applicant: **Robert Bosch GmbH
70442 Stuttgart (DE)**

(72) Inventors:
• **HE, Jiabo
 Shanghai, 200335 (CN)**
• **HUANG, Jianing
 Shanghai, 200335 (CN)**
• **ZHANG, Kaixuan
 Shanghai, 200335 (CN)**

(54) **METHOD AND APPARATUS FOR TRAINING BACKBONE NETWORK**

(57) The present application relates to a method for pre-training a backbone network for encoding three-dimensional point cloud data into feature vectors, comprising: encoding a first data point set in a three-dimensional point cloud into a first feature vector set by the backbone network; generating a corresponding plurality of extended data points based on each first data point in the first data point set to obtain a second data point set; for each first data point and the corresponding plurality of extended data points in the second data point set: assigning predetermined occupancy probabilities to the first data point and the corresponding plurality of extended data points, respectively, and generating second feature vectors for the first data point and the corresponding plurality of extended data points, respectively; generating a predicted occupancy probability for each data point based on the second feature vector of each data point in the second data point set; and updating learnable parameters of the backbone network based on the predetermined occupancy probability and the predicted occupancy probability of each data point in the second data point set.

<u>500</u>

510

520

530

540

550

**FIG. 5**

EP 4 675 499 A1

**Description**

**Technical Field**

The present application relates to the training of a neural network model, and more specifically, to a method and an apparatus for pre-training a backbone network based on three-dimensional point cloud data.

**Background**

In autonomous driving solutions, LiDAR is increasingly utilized to sense the vehicle's surroundings. LiDAR accurately senses the three-dimensional environment of the vehicle and has low sensitivity to cope with adverse conditions, such as low brightness and excessive light.

The perception method based on LiDAR can be implemented using a neural network model. For example, the neural network model performs semantic segmentation or object detection based on the point cloud data obtained from the LiDAR, thereby perceiving the surroundings. Training the neural network model for these semantic segmentation or object detection tasks requires a large annotated dataset. However, annotating three-dimensional point cloud data for these tasks is very time-consuming and costly.

It would be advantageous to reduce the amount of annotated datasets required for training the neural network model for the aforementioned tasks. Additionally, it would be beneficial to maintain or even improve training performance while decreasing the amount of data in the annotated datasets.

**Summary of the Invention**

The following introduction is provided in order to introduce selected concepts in a simple manner, and these concepts will be further described in the detailed description below. The introduction is not intended to highlight the key or necessary features of the claimed subject matter, nor is it intended to limit the scope of the claimed subject matter.

According to one aspect of the present application, a method for pre-training a backbone network for encoding three-dimensional point cloud data into feature vectors is provided, comprising: encoding a first data point set in a three-dimensional point cloud into a first feature vector set by the backbone network, wherein each first data point in the first data point set corresponds to each first feature vector in the first feature vector set; generating a corresponding plurality of extended data points based on each first data point in the first data point set to obtain a second data point set, the second data point set comprising the first data points and the extended data points; for each first data point and the corresponding plurality of extended data points in the second data point set: assigning predetermined occupancy probabilities to the first data points and the corresponding plurality of extended data points, respectively, the assigned predetermined occupancy probabilities at least comprising different first occupancy probabilities, second occupancy probabilities and third occupancy probabilities; generating second feature vectors for the first data point and the corresponding plurality of extended data points respectively based on the first feature vector of the first data point generated by the backbone network; generating predicted occupancy probabilities for the first data point and each data point of the extended data points based on the second feature vectors of the first data point and each data point of the extended data points of the second data point set; and updating learnable parameters of the backbone network based on the predetermined occupancy probabilities and the predicted occupancy probabilities of the first data point and each data point of the extended data points of the second data point set.

According to one aspect of the present application, a method for training a neural network model for performing a downstream task based on three-dimensional point cloud data is provided, comprising: pre-training a backbone network in the neural network model by the method according to each example of the present disclosure; encoding a data point set in the three-dimensional point cloud into a feature vector set by the pre-trained backbone network; generating a prediction result of the downstream task based on the feature vector set by a downstream task subnetwork in the neural network model; and updating learnable parameters of the downstream task subnetwork based on the prediction result.

According to one aspect of the present application, an apparatus for pre-training a backbone network module for encoding three-dimensional point cloud data into feature vectors, comprising: a backbone network module, which encodes a first data point set in a three-dimensional point cloud into a first feature vector set, wherein each first data point in the first data point set corresponds to each first feature vector in the first feature vector set; a training data generation module, which generates a corresponding plurality of extended data points based on each first data point in the first data point set to obtain a second data point set, wherein the second data point set comprises the first data points and the extended data points, and for each first data point and the corresponding plurality of extended data points in the second data point set: assigns predetermined occupancy probabilities to the first data points and the corresponding plurality of extended data points, respectively, wherein the assigned predetermined occupancy probabilities at least comprise different first occupancy probabilities, second occupancy probabilities and third occupancy probabilities, and generates second feature vectors for the first data point and the corresponding plurality of extended data points respectively based on the first feature vector of the first data point generated by the backbone network; an occupancy decoder module, which generates predicted occupancy probabilities for the first data point and each data point of the extended data points based on the second feature vectors of the first data point and each data point of the extended data points of the second data point set; and a parameter update module, which updates learnable parameters of the backbone network module based on the predetermined occupancy probabilities and the predicted occupancy probabilities of the first data point and each data point of the extended data points of the second data point set.

According to one aspect of the present application, a computer system for training a neural network model is provided, comprising: one or more processing units, which, when executing program instructions, are configured to execute the method described herein for pre-training a backbone network for encoding three-dimensional point cloud data into feature vectors or a method for training a neural network model for performing a downstream task based on three-dimensional point cloud data.

According to one aspect of the present application, a machine-readable storage medium is provided, which stores executable instructions that, when executed, cause one or more processors to perform the method described herein for pre-training a backbone network for encoding three-dimensional point cloud data into feature vectors or the method for training a neural network model for performing a downstream task based on three-dimensional point cloud data.

According to one aspect of the present application, a computer program product is provided, which comprises executable instructions that, when executed, cause one or more processors to perform the method described herein for pre-training a backbone network for encoding three-dimensional point cloud data into feature vectors or the method for training a neural network model for performing a downstream task based on three-dimensional point cloud data.

## Brief Description of the Drawings

The nature and advantages of the present disclosure may be further implemented by referring to the following accompanying drawings. In the drawings, similar components or features may have the same reference signs.

FIG. 1 is a schematic diagram of an overall framework for training a neural network model for performing a specific task based on three-dimensional point cloud data according to one example.

FIG. 2 is a schematic diagram of generating self-training data annotations based on data points in a point cloud and corresponding feature vectors according to one example.

FIG. 3 is a schematic diagram of an overall framework for training a neural network model for performing a specific task based on three-dimensional point cloud data according to one example.

FIG. 4 is a schematic diagram of generating self-training data annotations based on data points in a point cloud and corresponding feature vectors according to one example.

FIG. 5 is a method for pre-training a backbone network for encoding three-dimensional point cloud data into feature vectors according to one example.

FIG. 6 is a method for training a neural network model for performing a downstream task based on three-dimensional point cloud data according to one example.

FIG. 7 is an apparatus for pre-training a backbone network module for encoding three-dimensional point cloud data into feature vectors according to one example.

FIG. 8 is a block diagram of a computer system for training a neural network model according to one example.

## Detailed Description of the Embodiments

The subject matter described herein will now be discussed with reference to exemplary embodiments. It should be understood that discussions about these embodiments are provided to aid those skilled in the art in better understanding and thereby implementing the subject matter described herein rather than limiting the scope of protection, applicability, or examples described in the Claims. Changes may be made to the functions and arrangements of the elements discussed without departing from the scope of protection of the content of the present disclosure. Various processes or components may be omitted, substituted, or added in the various examples as needed. For example, the described method may be performed in a different order than that described, and various steps may be added, omitted, or combined. In addition, features described in relation to some examples may also be combined in other examples.

As used herein, the term "comprising" and its variations are open terms, which mean "including but not limited to". The term "based on" indicates "at least partially based on". The terms "one example" and "an example" indicate "at least one example". The term "another example" indicates "at least one other example". The terms "first", "second", etc. may refer to different or same objects. Unless explicitly stated in the context, the definition of one term is consistent throughout the description.

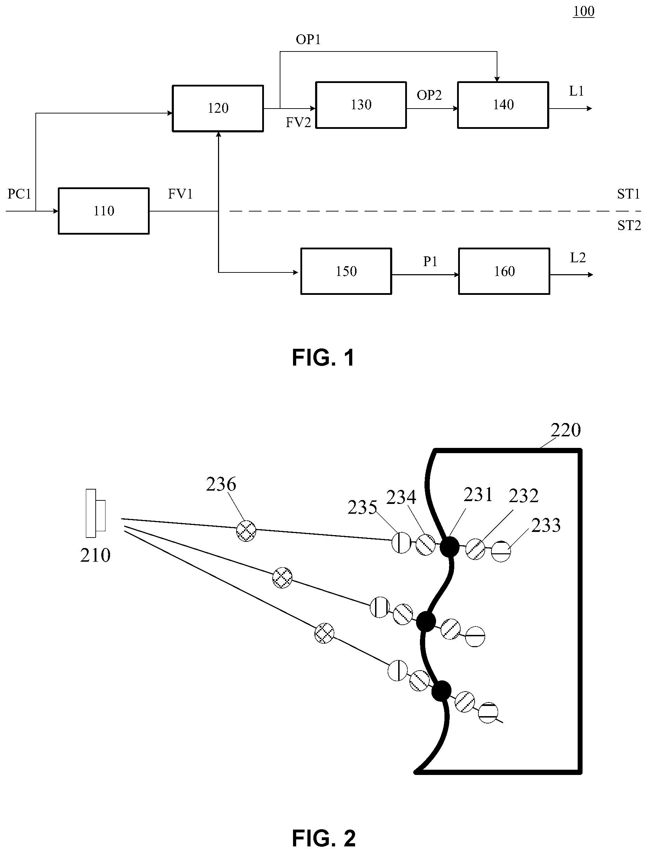

FIG. 1 is a schematic diagram of an overall framework for training a neural network model for performing a specific task based on three-dimensional point cloud data according to one example.

The overall framework or system 100 shown in FIG. 1 comprises a pre-training part or pre-training stage ST1 and a downstream task training part or downstream task training stage ST2. As shown by the dashed line in FIG. 1, the pre-training part ST1 comprises a backbone network module 110, a training data generation module 120, a pre-training task network module 130 and a parameter update module 140, but does not comprise modules 150 and 160, and the downstream task training part ST2 comprises the backbone network module 110, a downstream task network module 150 and the parameter update module 160, but does not comprise modules 120, 130 and 140.

In the pre-training part ST1, the backbone network 110 is pre-trained, wherein the backbone network 110 is used to generate feature vectors FV1 of data points in a point cloud PC1 based on the point cloud PC1, and the feature vectors FV1 may also be called latent vectors. After the pre-training of the backbone network 110 is completed, the downstream task network module 150 is trained in the downstream task training part ST2. In the pre-training part ST1, the backbone network 110 is trained using training data without manual annotations in a self-supervised manner, so that the pre-trained backbone network 110 can effectively extract the feature vectors FV1 of the point cloud data PC1, which are latent vectors in the latent space. In the downstream task training part, since the backbone network has been fully trained, only a small amount of annotated training data is required to train the downstream task network module 150.

In order to pre-train the backbone network 110 in a self-supervised manner, a pre-training task is performed by the pre-training task network module 130 during the pre-training stage. According to one example, the pre-training task may be an occupancy classification task, which classifies a query point in a point cloud as full or empty, wherein "full" means that the space volume represented by the point is occupied by an object or subject, and "empty" means that the space volume represented by the point is not occupied by an object or subject. After obtaining the classification result of the query point, the surface of the object or subject may be reconstructed from the point cloud data, and therefore the classification task may also be called a surface reconstruction task.

As shown in FIG. 1, in the pre-training stage ST1, the backbone network 110 receives the point cloud data PC1 and generates feature vectors FV1 corresponding to the data points in the point cloud PC1. In one example, the three-dimensional point cloud PC1 may be obtained by a LiDAR. For example, the LiDAR installed on the vehicle scans the surroundings by emitting laser pulses. The laser pulses emitted from the LiDAR will be reflected from the surface of an object (or subject) in the surroundings and return to the LiDAR in the form of echoes. The point cloud data PC1 is obtained by processing the returned echoes. The point cloud data PC1 may comprise rich information related to the reflecting object, such as three-dimensional space coordinates, echo times, significance information, etc. It can be understood that obtaining point cloud data by LiDARs is a technology known in the art, and point cloud data obtained by any known technology or future improved technology is applicable to the technical solution of the examples of the present disclosure. It can be understood that point cloud data obtained by other types of sensors are also applicable to the technical solution of the examples of the present disclosure. In addition, the backbone network 110 can be implemented by using any appropriate neural network model, for example, a convolutional neural network (CNN), such as a Minkowski convolutional neural network (Minkowski CNN). It can be understood that any known or future improved backbone network model is applicable to the technical solution of the examples of the present disclosure.

The self-training data generation module 120 generates self-training data based on the point set in the point cloud PC1 and the corresponding feature vector set FV1. FIG. 2 is a schematic diagram of generating self-training data based on data points in the point cloud and corresponding feature vectors according to one example.

In the schematic diagram shown in FIG. 2, a black dot 231 represents a point on the surface of an object 220 detected by a LiDAR sensor 210. Although FIG. 2 shows only three points in the point cloud PC1, it can be understood that the point cloud PC1 may comprise any number of three-dimensional data points. For ease of description, the points in the point cloud PC1 are referred to as detection points. Taking the illustrated data point 231 as an example, the self-training data generation module 120 generates five extended data points 232 to 236 based on the point 231. In one example, the three-dimensional positions of the extended points 232 to 236 may be determined based on the three-dimensional position $c$ of the sensor 210 and the three-dimensional position $p$ of the detection point 231. For example, a unit vector $u = (p - c)\|p - c\|$ pointing from the sensor position $c$ to the detection point position $p$ may be determined based on the three-dimensional position $c$ of the sensor 210 and the three-dimensional position $p$ of the detection point 231. The positions $p_{e1}$ to $p_{e4}$ of the extended points 232 to 235 on both sides of the detection point 231 are determined based on the unit vector $u$ and the step size $\delta$. Specifically, the positions of the extended points 232 to 235 are $p_{e1} = p + \delta u$, $p_{e2} = p + 2\delta u$, $p_{e3} = p - \delta u$, $p_{e4} = p - 2\delta u$, where $\delta$ is a predefined step value. In addition, a random point is selected between the three-dimensional position $c$ of the sensor 210 and the three-dimensional position $p$ of the detection point 231 as the fifth extended point 236. Specifically, the position of the random extended point 236 is $p_{e5} = p + r(c - p)$, where $r$ is a random number between 0 and 1, and $(c - p)$ represents a vector pointing from the detection point position $p$ to the sensor position $c$.

As shown in FIG. 2, for each detection point 231, five corresponding extended points 232 to 236 are determined based on the position of the detection point 231 and the position of the sensor. Points 234, 235 and 236 located on the same side of the sensor 210 with respect to the detection point 231 may be referred to as front points, and points 232 and 233 located on the other side of the detection point 231 may be referred to as rear points. For ease of description, the set of three-dimensional data points 231 in the point cloud PC1 may be referred to as a first data point set or a detection point set, and the set comprising the three-dimensional data points 231 in the first data point set and the corresponding extended data points 232 to 236 may be referred to as a second data point set or an extended point set.

Taking the data points 231 to 236 shown in FIG. 2 as an example, for each detection data point 231, the self-training data generation module 120 assigns corresponding data points 231 to 236.

For example, the occupancy probability of the detection data point 231 is $o$ =0.5, the occupancy probabilities of the front points 235 and 234 are $o_{e4}$ =0, $o_{e3}$ =0.25, the occupancy probabilities of the rear points 232 and 233 are $o_{e1}$ =0.75, $o_{e2}$ =1, and the occupancy probability of the random front point 236 is $oe5$ =0.

Taking the data points 231 to 236 shown in FIG. 2 as an example, for each detection data point 231, as described above, the backbone network module 110 generates a feature vector FV1 of the detection data point 231, and the self-training data generation module 120 generates second feature vectors FV2 for the corresponding data points 231 to 236 based on the feature vector FV1 of the detection data point 231. In one example, the second feature vectors FV2 may be generated for the corresponding data points 231 to 236 based on the position of the detection data point 231 and the positions of the corresponding plurality of extended data points 232 to 236. The feature vector or latent vector FV1 of the detection data point 231 generated by the backbone network module 110 is expressed as FV1=$z_s$. In one example, the second feature vector FV2 of the data point may be obtained by concatenating the feature vector FV1=$z_s$ of the detection data point 231 with the position of each data point in the corresponding data points 231 to 236. For example, as described above, the positions of the data points 231 to 236 are the three-dimensional coordinates $p$, $p_{e1}$, $p_{e2}$, $p_{e3}$, $p_{e4}$, $p_{e5}$, respectively. The second feature vectors FV2 of the data points 231 to 236 are obtained by concatenating the feature vector FV1=$z_s$ of the detection data point 231 with the three-dimensional coordinates $p$, $p_{e1}$, $p_{e2}$, $p_{e3}$, $p_{e4}$, $p_{e5}$, respectively. For example, assuming that the dimension of the first feature vector FV1 is n, the dimension of the second feature vector FV2 is n + 3. In another example, the second feature vector FV2 of the data point may be obtained by concatenating the feature vector FV1=$z_s$ of the detection data point 231 with the difference between the position of each data point in the corresponding data points 231 to 236 and the position of the detection data point 231. For example, as described above, the positions of data points 231 to 236 are three-dimensional coordinates $p$, $p_{e1}$, $p_{e2}$, $p_{e3}$, $p_{e4}$, and $p_{e5}$, respectively. The second feature vectors FV2 of data points 231 to 236 are obtained by concatenating the feature vector FV1=$z_s$ of the detection data point 231 with the three-dimensional coordinate differences $(p - p)$, $(pe1 - p)$, $(pe2 - p)$, $(pe3 - p)$, $(pe4 - p)$, and $(pe5 - p)$. For example, assuming that the dimension of the first feature vector FV1 is n, the dimension of the second feature vector FV2 is n + 3.

For each detection data point 231, extended data points 231 to 236 are obtained, and for each extended data point, the occupancy probability and the second feature vector FV2 of the data point are obtained as a training data pair corresponding to the extended data point. Thus, the number of data points in the point cloud PC1 is effectively expanded. Moreover, by assigning soft occupancy probability values not limited to 0 and 1 to a plurality of extended data points, it can help the backbone network 110 to more efficiently learn the representation of the latent features of the point cloud data during the training process of the reconstruction task.

Returning to FIG. 1, the second feature vectors FV2 of the extended points in the extended point set are used as the input of the pre-training task network module 130. In one example, the pre-training task network module 130 may be an occupancy decoder, which is used to perform an occupancy classification task, and generates a predicted occupancy probability $OP2 = \hat{o_q}$ of each extended point q for the second feature vector FV2 of the extended point $q$. The predicted occupancy probability $OP2 = \hat{o_q}$ is a value in the interval [0, 1]. In one example, the occupancy decoder 130 may be implemented by a multi-layer perceptron (MLP) neural network model. It can understood that any suitable neural network model may be used to implement the occupancy classification task of the occupancy decoder 130.

The parameter update module 140 generates a training loss value L1 based on the predicted occupancy probabilities OP2 of the extended data points generated by the occupancy decoder 130 and the predetermined occupancy probabilities OP1 of the corresponding extended data points assigned by the training data generation module 120. Further, the trainable parameters in the pre-training part ST1 may be updated based on the training loss value L1. For example, the trainable parameters in the pre-training part ST1 comprise the trainable parameters of the backbone network 110 and the occupancy decoder 130. Updating the trainable parameters of the neural network model based on the loss value may be achieved by methods known in the art, which will not be described in detail.

In one example, the loss value L1 may be determined based on the cross entropies between the predicted occupancy probability values and the assigned occupancy probability values of the data points in the extended point set. For example, the loss value L1 may be determined based on formula (1):

$$L1 = \mathcal{L}_{\text{occup}} = \frac{-1}{|Q|} \sum_{q \in Q} o_q \log(\hat{o}_q) + (1 - o_q)\log(1 - \hat{o}_q) \qquad (1)$$

wherein, $Q$ represents the extended point set, $|Q|$ represents the number of points in the extended point set, $o_q$ represents the assigned occupancy probability, and $\hat{o}_q$ represents the predicted occupancy probability.

In another example, for each detection point $s$ in the detection point set, a sphere with a radius of $r$ centered at the detection point $s$ is constructed as the neighborhood of the detection point $s$, and the extented point subset $Q_s = \{q \in Q, \|q - s\| \leq r\}$ in the extended point set comprised in the neighborhood is used as the neighborhood extended points of the detection point $s$. For ease of description, the above $q$ and $s$ represent both the point and the coordinates of the point, and $Q$ represents the extended point set. In this example, the loss value L1 may be determined based on formula (2):

$$L1 = \mathcal{L}_{\text{occup}} = \frac{-1}{|S|} \sum_{s \in S} \frac{1}{|Q_s|} \sum_{q \in Q_s} o_q \log(\hat{o}_q) + (1 - o_q)\log(1 - \hat{o}_q) \qquad (2)$$

wherein, $S$ represents the detection point set, $|S|$ represents the number of points in the detection point set, $Q_s$ represents the extented point subset of the neighborhood of the detection point $s$, $|Q_s|$ represents the number of points in the extended point subset, $o_q$ represents the assigned occupancy probability, and $\hat{o}_q$ represents the predicted occupancy probability.

Through the above-mentioned pre-training part ST1, a pre-trained backbone network 110 may be obtained. Referring to FIG. 1, the pre-training of the backbone network 110 is completed, the downstream task network module 150 is trained in the downstream task training part ST2. The downstream task network module 150 may be, for example, a neural network model for performing a point cloud segmentation task or a neural network model for performing an object recognition task. Any suitable neural network model may be used to implement the segmentation task or recognition task in the downstream task network module 150. Since the backbone network 110 has been fully trained in the pre-training part, only a small amount of annotated training data is needed in the downstream task training part to train the downstream task network module 150, and the annotated training data comprises the point cloud PC1 and the corresponding label P1$_T$.

The backbone network 110 generates corresponding feature vectors FV1 based on the three-dimensional data points in the point cloud PC1 in the training data, the downstream task network module 150 generates a predicted task result P1 based on the feature vectors FV1, and the parameter update module 160 generates a loss value L2 based on the predicted value P1 of the result and the label P1$_T$. Then, the learnable parameters of the downstream task network module 150 are updated based on the loss value L2. It can be understood that in the process of updating the learnable parameters of the downstream task network module 150 based on the loss value L2, only the learnable parameters of the downstream task network module 150 may be updated based on the loss value L2 and the parameters of the backbone network 110 may be frozen, or the learnable parameters of the downstream task network module 150 and at least a portion of the learnable parameters of the backbone network 110 may be updated based on the loss value L2.

It can be understood that the downstream task network module 150 may be any network model for performing downstream tasks based on three-dimensional point clouds, and any appropriate method may be used to calculate the loss value L2 and perform updates of the downstream task network module 150 based on the loss value L2.

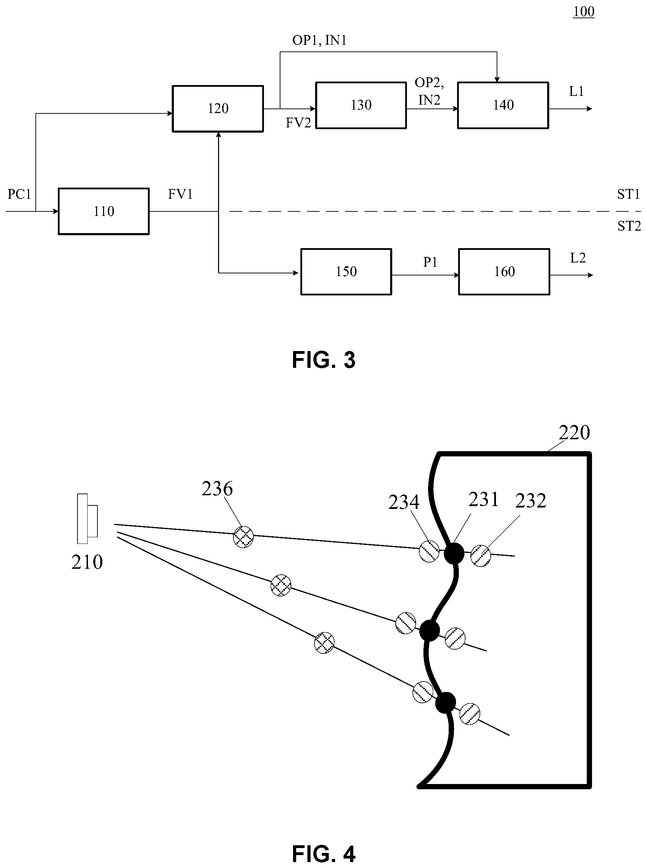

FIG. 3 is a schematic diagram of an overall framework for training a neural network model for performing a specific task based on three-dimensional point cloud data according to one example. The same reference signs in FIG. 3 as those in FIG. 1 indicate the same or corresponding elements.

The example shown in FIG. 3 is different from the example shown in FIG. 1 in that the training data generation module 120 also assigns an intensity value IN1 to at least a portion of the extended points. Taking the example shown in FIG. 2 as an example, the training data generation module 120 assigns the intensity value of the detection point 231 to the front points 234, 235 and the rear points 232, 233 adjacent to the detection point 231, wherein the intensity value of the detection point 231 is comprised in the point cloud data, and the intensity value of the random extended point 236 is set to zero or a meaningless value. The other operations of the training data generation module 120 are the same as those of the example shown in FIG. 1, and will not be repeated. For each detection data point 231, extended data points 231 to 236 are obtained, and for each extended data point, the occupancy probability OP1, the intensity value IN1 and the second feature vector FV2 of the data point are obtained as a training data pair corresponding to the extended data point.

The second feature vectors FV2 of the extended points in the extended point set are used as the input of the pre-training task network module 130. In one example, the pre-training task network module 130 may be an occupancy decoder, which is used to perform an occupancy classification task, and generates a predicted occupancy probability $OP2 = \hat{o}_q$ and a predicted intensity $IN2 = \hat{\iota}_q$ of each extended point $q$ for the second feature vector FV2 of the extended point $q$.

The parameter update module 140 generates an occupancy loss value $\mathcal{L}_{\text{occup}}$ based on the predicted occupancy probability OP2 of the extended data point generated by the occupancy decoder 130 and the predetermined occupancy probability OP1 of the corresponding extended data point assigned by the training data generation module 120, for example, by using the above formula (1) or (2) to generate the occupancy loss value $\mathcal{L}_{\text{occup}}$ .

The parameter update module 140 generates an intensity loss value $\mathcal{L}_{\text{int}}$ based on the predicted intensity $OP2 = \hat{i}_q$ of at least a portion of the extended data points (e.g., detection point, front points, and rear points) generated by the occupancy decoder 130 and the predetermined intensity $IN1 = i_q$ of the corresponding extended data points assigned by the training data generation module 120.

In one example, the loss value $\mathcal{L}_{\text{int}}$ may be determined based on the error between the predicted intensity and the assigned intensity of at least a portion of the data points in the extended point set. For example, the intensity loss value $\mathcal{L}_{\text{int}}$ may be determined based on formula (3):

$$\mathcal{L}_{\text{int}} = \frac{1}{|Q'|} \sum_{q \in Q'} ||\hat{i}_q - i_q||_2 \qquad (3)$$

wherein, $Q' \in Q$ represents a subset of points with valid intensity values in the extended point set. For example, in the example shown in FIG. 2, $Q'$ comprises detection point, front points and rear points but does not comprise random points, $|Q'|$ represents the number of points in the extented point subset, $i_q$ represents the assigned intensity, $\hat{i}_q$ represents the predicted intensity, and $\| \cdot \|_2$ represents the $l_2$ distance.

In another example, for each detection point s in the detection point set, a sphere with a radius of $r$ centered at the detection point $s$ is constructed as the neighborhood of the detection point $s$, and the extented point subset $Q_s = \{q \in Q, \|q - s\| \leq r\}$ in the extended point set comprised in the neighborhood is used as the neighborhood extended points of the detection point $s$. For ease of description, the above q and s represent both the point and the coordinates of the point, and Q represents the extended point set. In this example, the loss value $\mathcal{L}_{\text{int}}$ may be determined based on formula (4):

$$\mathcal{L}_{\text{int}} = \frac{1}{|S|} \sum_{s \in S} \frac{1}{|Q'_s|} \sum_{q \in Q'_s} ||\hat{i}_q - i_q||_2 \qquad (4)$$

wherein, $S$ represents the detection point set, $|S|$ represents the number of points in the detection point set, $Q'_s$ represents the subset of points with valid intensity values in the extented point subset of the neighborhood of the detection point s, $|Q'_s|$ represents the number of points in the subset of points with valid intensity values, $i_q$ represents the assigned intensity, $\hat{i}_q$ represents the predicted intensity, and $\| \cdot \|_2$ represents the $l_2$ distance.

The parameter update module 140 may generate a total loss value L1 based on the occupancy loss value $\mathcal{L}_{\text{occup}}$ and the intensity loss value $\mathcal{L}_{\text{int}}$ , for example, as shown in formula (5):

$$L1 = \mathcal{L}_{\text{occup}} + \lambda \mathcal{L}_{\text{int}} \qquad (5)$$

wherein $\lambda$ is a predetermined weighting coefficient.

FIG. 4 is a schematic diagram of generating self-training data based on data points in the point cloud and corresponding feature vectors according to one example. The same reference signs in FIG. 4 as those in FIG. 2 indicate the same or corresponding elements.

The example shown in FIG. 4 is different from the example shown in FIG. 2 in that two adjacent extended points 232 and 234 are generated for each detection point 231, that is, a front point 234 and a rear point 232. Accordingly, the three-dimensional positions of the extended points 232 and 234 may be determined based on the three-dimensional position $c$ of the sensor 210 and the three-dimensional position $p$ of the detection point 231. For example, the positions of the extended points 232 and 234 are $p_{e1} = p + \delta u$ and $p_{e2} = p - \delta u$, respectively, wherein $\delta$ is a predefined step value. Accordingly, for each detection point 231, the set of three-dimensional data points 231 in the point cloud PC1 may be referred to as a first data point set or a detection point set, and the set comprising the three-dimensional data points 231 in the first data point set and the corresponding extended data points 232, 234, 236 may be referred to as a second data point set or an extended point set.

For each detection data point 231, the self-training data generation module 120 assigns corresponding occupancy probabilities to the corresponding extended data points 231, 232, 234, and 236. For example, the occupancy probability of the detection data point 231 is $o$ = 0.5, the occupancy probability of the front point 234 is $o_{e2}$ = 0, the occupancy probability of the rear point 232 is $o_{e1}$ = 1, and the occupancy probability of the random front point 236 is $o_{e3}$ = 0.

For each detection data point 231, the backbone network module 110 generates a feature vector FV1 of the detection data point 231, and the self-training data generation module 120 generates second feature vectors FV2 for the corresponding data points 231, 232, 234, and 236 based on the feature vector FV1 of the detection data point 231. In one example, the second feature vector FV2 of the data point may be obtained by concatenating the feature vector FV1=$z_s$ of the detection data point 231 with the position of each data point in the corresponding data points 231, 232, 234, and 236. In another example, the second feature vector FV2 of the data point may be obtained by concatenating the feature vector FV1=$z_s$ of the detection data point 231 with the difference between the position of each data point in the corresponding data points 231, 232, 234, and 236 and the position of the detection data point 231.

For each detection data point 231, extended data points 231, 232, 234 and 236 are obtained. For each extended data point, the occupancy probability and the second feature vector FV2 of the data point are obtained as a training data pair corresponding to the extended data point.

As described above with reference to FIG. 3, the self-training data generation module 120 may also assign intensity values to the extended data points 231, 232, 234, and 236. For example, the front point 234 and the rear point 232 adjacent to the detection point 231 are assigned the intensity value of the detection point 231, and the intensity value of the random extended point 236 is set to zero or a meaningless value. For each detection data point 231, extended data points 231, 232, 234, and 236 are obtained. For each extended data point, the occupancy probability OP1, the intensity value IN1, and the second feature vector FV2 of the data point are obtained as a training data pair corresponding to the extended data point.

Then, the backbone network 110 may be trained based on the extended training data set shown in FIG. 4 by the pre-training task network module 130 and the parameter update module 140 shown in FIG. 1 or FIG. 3. The specific training process is similar to the training process described in the above formulas (1) to (4), and will not be repeated.

It can be understood that FIGs. 2 and 4 respectively provide examples for generating an extended training data set based on data points in a point cloud, but the method of generating an extended training data set is not limited to the specific examples provided in FIGs. 2 and 4. For example, for each detection data point 231, only the front point(s) and the rear point(s) may be generated without generating the extended point 236, so that the extended point set only comprises the front point(s), the detection point, and the rear point(s), but does not comprise the random point(s). For another example, for each detection data point 231, the number of the front point and the rear point is not limited to a specific number, and an appropriate number of the front point and an appropriate number of the rear point may be generated, and the number of the front point is not necessarily the same as the number of the rear point. For another example, for each detection data point 231, the positions of the front point and the rear point are not necessarily evenly spaced. For example, taking FIG. 2 as an example, the front points 235, 234 and the rear points 232, 233 may be respectively at a corresponding predetermined distance from the detection point 231, but the points 235, 234, 231, 232 and 233 do not necessarily have to be evenly spaced. For another example, the occupancy probabilities assigned to the front point, the detection point, and the rear point in sequence do not necessarily have to be probability values evenly distributed in the interval [0, 1], and other appropriate probability values may also be taken. For example, taking FIG. 2 as an example, the occupancy probability values distributed in sequence to the points 235, 234, 231, 232 and 233 may be 0, 0.2, 0.5, 0.8 and 1. It can be understood that, taking FIG. 2 as an example, the position of each front point and rear point on each straight line between the detection point 231 and the sensor 210 and the corresponding occupancy probability may be set or adjusted according to specific tasks and requirements, and are not limited to the specific examples described in the above examples.

It can be understood that although the above describes the three-dimensional point cloud PC1 using the LiDAR three-dimensional point cloud as an example, the examples of the present disclosure can be applied to other types of three-dimensional point clouds, such as three-dimensional point cloud data obtained by a three-dimensional camera.

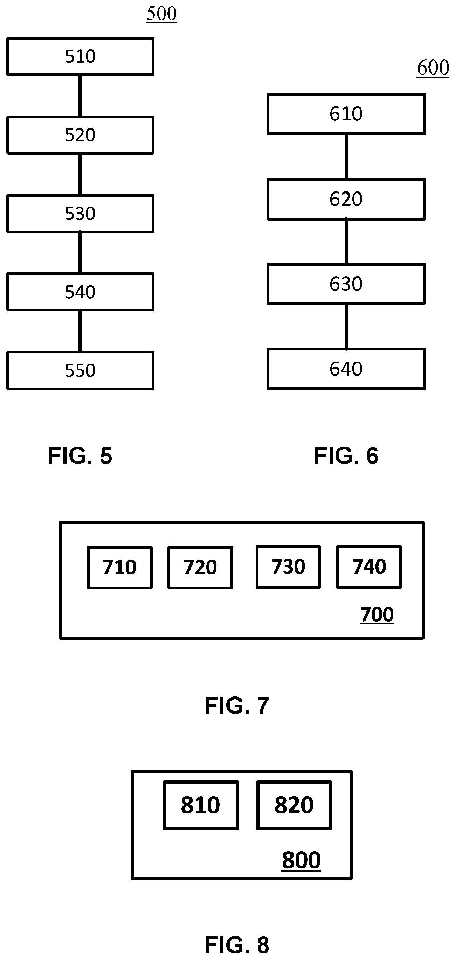

FIG. 5 is a method for pre-training a backbone network for encoding three-dimensional point cloud data into feature vectors according to one example.

At step 510, the backbone network encodes the first data point set in the three-dimensional point cloud into a first feature vector set, wherein each first data point in the first data point set corresponds to each first feature vector in the first feature vector set.

At step 520, a corresponding plurality of extended data points are generated based on each first data point in the first data point set to obtain a second data point set, wherein the second data point set comprises the first data points and the extended data points.

At step 530, for each first data point and the corresponding plurality of extended data points in the second data point set: predetermined occupancy probabilities are respectively assigned to the first data point and the corresponding plurality of extended data points, and the assigned predetermined occupancy probabilities comprise at least different first occupancy probabilities, second occupancy probabilities and third occupancy probabilities; and second feature vectors are respectively generated for the first data point and the corresponding plurality of extended data points based on the first feature vector of the first data point generated by the backbone network.

At step 540, the predicted occupancy probabilities of the first data point and each data point of the extended data points are generated based on the second feature vectors of the first data point and each data point of the extended data points of the second data point set.

At step 550, the learnable parameters of the backbone network are updated based on the predetermined occupancy probabilities and the predicted occupancy probabilities of the first data point and each data point of the extended data points of the second data point set.

According to one example, the step 520 further comprises: determining the positions of the corresponding plurality of extended data points based on the position of the first data point and the position of the corresponding sensor. The position is represented as three-dimensional coordinates, and the corresponding sensor is a sensor used to obtain the first data point.

According to one example, the step 520 further comprises: sampling the positions of the plurality of extended data points on a connecting line (e.g., a straight line) between the position of the data point and the position of the sensor, wherein the plurality of extended data points comprise a first extended data point on a first side of the first data point and a second extended data point on a second side of the first data point, wherein the first data point, the first extended data point, and the second extended data point are respectively assigned the first occupancy probability, the second occupancy probability, and the third occupancy probability. In one example, the first extended data point and the second extended data point are respectively at a predetermined distance from the first data point.

According to one example, the plurality of extended data points comprise a third extended data point and the first extended data point in sequence on the first side of the first data point and a fourth extended data point and the second extended data point in sequence on the second side of the first data point, wherein the third extended data point and the fourth extended data point are respectively assigned a fourth occupancy probability and a fifth occupancy probability in the predetermined occupancy probability, wherein the first occupancy probability, the second occupancy probability, the third occupancy probability, the fourth occupancy probability and the fifth occupancy probability are different. In one example, the third extended data point and the fourth extended data point are respectively at a predetermined distance from the first data point.

According to one example, the plurality of extended data points comprise a fifth extended data point on the first side of the first data point, wherein the fifth extended data point is assigned the second occupancy probability. According to one example, the first, second, third and fourth extended data points are respectively at a predetermined distance from the first data point, and the fifth extended data point is at a random distance from the first data point. According to one example, the first occupancy probability, the second occupancy probability, the third occupancy probability, the fourth occupancy probability and the fifth occupancy probability are 0.5, 0, 1, 0.25 and 0.75 respectively.

According to one example, the step 540 further comprises: generating predicted intensity values of the first data point and each data point of at least a portion of the extended data points based on the second feature vectors of the first data point and each data point of the extended data points of the second data point set. The step 550 further comprises: updating the learnable parameters of the backbone network based on the predetermined intensity values and predicted intensity values of the first data point and each data point of the at least portion of the extended data points of the second data point set.

According to one example, the intensity value of each extended data point of the at least portion of the extended data points is determined based on the intensity value of the first data point corresponding to the extended data point. For example, the intensity value of each extended data point in the at least portion of the extended data points is equal to the intensity value of the first data point corresponding to the extended data point.

According to one example, the step 530 further comprises: generating second feature vectors for the first data point and the corresponding plurality of extended data points respectively based on the first feature vector of the first data point and the positions of the first data point and the corresponding plurality of extended data points. In one example, generating second feature vectors for the first data point and the corresponding plurality of extended data points based on the first feature vector of the first data point generated by the backbone network comprises: generating second feature vectors for the first data point and the corresponding plurality of extended data points by combining the first feature vector of the first data point with the positions of the first data point and the corresponding plurality of extended data points; or generating second feature vectors for the first data point and the corresponding plurality of extended data points by combining the first feature vector of the first data point with the positions of the first data point and the corresponding plurality of extended data points and the difference between the positions of the first data points.

According to one example, the method 500 further comprises: for each first data point in the second data point set, determining the data points in the second data point set within a predetermined range comprising the first data point as a corresponding second data point subset, thereby obtaining a plurality of second data point subsets corresponding to each first data point in the second data point set. The step 550 further comprises: updating the learnable parameters of the backbone network based on the predetermined occupancy probability and the predicted occupancy probability of each data point in each second data point subset of the plurality of second data point subsets.

According to one example, the three-dimensional point cloud is a LiDAR three-dimensional point cloud.

FIG. 6 is a method for training a neural network model for performing a downstream task based on three-dimensional point cloud data according to one example.

At step 610, the backbone network in the neural network model is pre-trained. The various examples described herein in conjunction with FIGs. 1-5 may be used to pre-train the backbone network based on the three-dimensional point cloud data.

At step 620, the pre-trained backbone network encodes a data point set in the three-dimensional point cloud into a feature vector set.

At step 630, the downstream task subnetwork in the neural network model generates a prediction result of the downstream task based on the feature vector set.

At step 640, the learnable parameters of the downstream task subnetwork are updated based on the prediction result.

In one example, in the process of updating the learnable parameters of the downstream task subnetwork, only the learnable parameters of the downstream task subnetwork may be updated and the parameters of the backbone network may be frozen. In another example, in the process of updating the learnable parameters of the downstream task subnetwork, the learnable parameters of the downstream task subnetwork and at least a portion of the learnable parameters of the backbone network may be updated.

In one example, the neural network model that performs the downstream task may be a neural network model that performs a point cloud segmentation task. In one example, the neural network model that performs the downstream task may be a neural network model that performs an object recognition task.

FIG. 7 is an apparatus for pre-training a backbone network module for encoding three-dimensional point cloud data into feature vectors according to one example.

The device 700 comprises: a backbone network module 710, a training data generation module 720, an occupancy decoder module 730 and a parameter update module 740. The backbone network module 710 encodes a first data point set in a three-dimensional point cloud into a first feature vector set, wherein each first data point in the first data point set corresponds to each first feature vector in the first feature vector set. The training data generation module 720 generates a corresponding plurality of extended data points based on each first data point in the first data point set to obtain a second data point set, wherein the second data point set comprises the first data point and the extended data points, and for each first data point and the corresponding plurality of extended data points in the second data point set: predetermined occupancy probabilities are respectively assigned to the first data point and the corresponding plurality of extended data points, and the assigned predetermined occupancy probabilities comprise at least different first occupancy probabilities, second occupancy probabilities and third occupancy probabilities; and second feature vectors are respectively generated for the first data point and the corresponding plurality of extended data points based on the first feature vector of the first data point generated by the backbone network. The occupancy decoder module 730 generates the predicted occupancy probabilities of the first data point and each data point of the extended data points based on the second feature vectors of the first data point and each data point of the extended data points of the second data point set. The parameter update module 740 updates the learnable parameters of the backbone network module 710 based on the predetermined occupancy probabilities and the predicted occupancy probabilities of the first data point and each data point of the extended data points of the second data point set.

According to one example, the training data generation module 720 generates a corresponding plurality of extended data points based on each first data point in the first data point set, comprising: determining the positions of the corresponding plurality of extended data points based on the position of the first data point and the position of the corresponding sensor.

According to one example, the training data generation module 720 generates a corresponding plurality of extended data points based on each first data point in the first data point set, comprising: sampling the positions of the plurality of extended data points on a connecting line between the position of the data point and the position of the sensor, wherein the plurality of extended data points comprise a first extended data point on a first side of the first data point and a second extended data point on a second side of the first data point, wherein the first data point, the first extended data point, and the second extended data point are respectively assigned the first occupancy probability, the second occupancy probability, and the third occupancy probability.

According to one example, the plurality of extended data points comprise a third extended data point and the first extended data point on the first side of the first data point and a fourth extended data point and the second extended data point on the second side of the first data point, wherein the third extended data point and the fourth extended data point are respectively assigned a fourth occupancy probability and a fifth occupancy probability in the predetermined occupancy probability, wherein the first occupancy probability, the second occupancy probability, the third occupancy probability, the fourth occupancy probability and the fifth occupancy probability are different.

According to one example, the plurality of extended data points comprise a fifth extended data point on the first side of the first data point, wherein the fifth extended data point is assigned the second occupancy probability.

According to one example, the first, second, third and fourth extended data points are respectively at a predetermined distance from the first data point, and the fifth extended data point is at a random distance from the first data point.

According to one example, the first occupancy probability, the second occupancy probability, the third occupancy probability, the fourth occupancy probability and the fifth occupancy probability are 0.5, 0, 1, 0.25 and 0.75 respectively.

According to one example, the occupancy decoder module 730 generates predicted intensity values of the first data point and each data point of at least a portion of the extended data points based on the second feature vectors of the first data point and each data point of the extended data points of the second data point set. The parameter update module 740 further updates the learnable parameters of the backbone network based on the predetermined intensity values and predicted intensity values of the first data point and each data point of the at least portion of the extended data points of the second data point set.

According to one example, the intensity value of each extended data point of the at least portion of the extended data points is determined based on the intensity value of the first data point corresponding to the extended data point.

According to one example, the training data generation module 720 generates second feature vectors for the first data point and the corresponding plurality of extended data points based on the first feature vector of the first data point generated by the backbone network module 710, comprising: generating second feature vectors for the first data point and the corresponding plurality of extended data points respectively based on the first feature vector of the first data point and the positions of the first data point and the corresponding plurality of extended data points.

According to one example, the training data generation module 720 generates second feature vectors for the first data point and the corresponding plurality of extended data points based on the first feature vector of the first data point generated by the backbone network module 710, comprising: generating second feature vectors for the first data point and the corresponding plurality of extended data points by combining the first feature vector of the first data point with the positions of the first data point and the corresponding plurality of extended data points; or generating second feature vectors for the first data point and the corresponding plurality of extended data points by combining the first feature vector of the first data point with the positions of the first data point and the corresponding plurality of extended data points and the difference between the positions of the first data points.

According to one example, for each first data point in the second data point set, the parameter update module 740 determines the data points in the second data point set within a predetermined range comprising the first data point as a corresponding second data point subset, thereby obtaining a plurality of second data point subsets corresponding to each first data point in the second data point set. The parameter update module 740 updates the learnable parameters of the backbone network based on the predetermined occupancy probabilities and the predicted occupancy probabilities of the first data point and each data point of the extended data points of the second data point set, comprising: updating the learnable parameters of the backbone network based on the predetermined occupancy probability and the predicted occupancy probability of each data point in each second data point subset of the plurality of second data point subsets.

FIG. 8 is a block diagram of a computer system for training a neural network model according to one example.

According to one example, a control system or processing system 800 may comprise one or more control units or processing units 810, and the control units 810 execute one or more machine-readable instructions stored or encoded in a machine-readable storage medium (i.e., memory 820). Although not shown in FIG. 8, those skilled in the art may appreciate that the control system 800 may comprise various other components, such as various communication modules, bus modules, and possible user interface modules, and the like. In one example, the control unit or processing unit 810, when executing program instructions, is configured to perform various operations and functions described above in conjunction with FIGs. 1-7.

According to one example, a machine-readable medium is provided. The machine-readable medium may have instructions that, when executed by a device such as the control unit 810, may perform various operations and functions described above in conjunction with FIGs. 1-7 in various examples of the present application.

According to one example, a computer program product is provided. The computer program product may comprise instructions that, when executed by a device such as the control unit 810, may perform various operations and functions described above in conjunction with FIGs. 1-7 in various examples of the present application.

Exemplary examples are described above with reference to the specific examples described in the accompanying drawings, but do not represent all examples that may be implemented or fall within the scope of protection of the Claims. Throughout the present Specification, the term "exemplary" means "serving as an example, instance, or illustration" and does not imply "preferred" or "advantageous" over other examples. Specific examples comprise specific details to facilitate understanding of the described technology. However, these technologies may be implemented without these specific details. In some instances, to avoid causing difficulties in understanding the concepts of the described examples, known structures and devices are shown in block diagram form.

The aforementioned description of the present disclosure is provided to allow any person of ordinary skill in the art to implement or use the present disclosure. Various modifications to the present disclosure will be apparent to those of ordinary skill in the art, and the general principles defined herein may be applied to other variations without departing from the scope of protection of the present disclosure. Therefore, the present disclosure is not limited to the exemplary examples and designs described herein but is consistent with the broadest scope defined by the principles and novel features disclosed herein.

**Claims**

1. A method for pre-training a backbone network for encoding three-dimensional point cloud data into feature vectors, comprising:

   encoding a first data point set in a three-dimensional point cloud into a first feature vector set by the backbone network, wherein each first data point in the first data point set corresponds to each first feature vector in the first feature vector set respectively;
   generating a corresponding plurality of extended data points based on each first data point in the first data point set to obtain a second data point set, wherein the second data point set comprises the first data point and the extended data point;
   for each first data point and the corresponding plurality of extended data points in the second data point set:

       assigning predetermined occupancy probabilities to the first data point and the corresponding plurality of extended data points, respectively, wherein the assigned predetermined occupancy probabilities comprise at least different first occupancy probabilities, second occupancy probabilities and third occupancy probabilities;
       generating second feature vectors for the first data point and the corresponding plurality of extended data points respectively based on the first feature vector of the first data point generated by the backbone network;
       generating predicted occupancy probabilities of the first data point and each data point of the extended data points based on the second feature vectors of the first data point and each data point of the extended data points of the second data point set;
       updating the learnable parameters of the backbone network based on the predetermined occupancy probabilities and predicted occupancy probabilities of the first data point and each data point of the extended data points of the second data point set.

2. The method according to claim 1, wherein generating a corresponding plurality of extended data points based on each first data point in the first data point set comprises: determining the positions of the corresponding plurality of extended data points based on the position of the first data point and the position of the corresponding sensor.

3. The method according to claim 2, wherein generating a corresponding plurality of extended data points based on each first data point in the first data point set comprises: sampling the positions of the plurality of extended data points on a connecting line between the position of the data point and the position of the sensor, wherein the plurality of extended data points comprise a first extended data point on a first side of the first data point and a second extended data point on a second side of the first data point, wherein the first data point, the first extended data point, and the second extended data point are respectively assigned the first occupancy probability, the second occupancy probability, and the third occupancy probability.

4. The method according to claim 3, wherein the plurality of extended data points comprise a third extended data point and the first extended data point on the first side of the first data point and a fourth extended data point and the second extended data point on the second side of the first data point, wherein the third extended data point and the fourth extended data point are respectively assigned a fourth occupancy probability and a fifth occupancy probability in the predetermined occupancy probability, wherein the first occupancy probability, the second occupancy probability, the third occupancy probability, the fourth occupancy probability and the fifth occupancy probability are different.

5. The method according to claim 4, wherein the plurality of extended data points comprise a fifth extended data point on the first side of the first data point, wherein the fifth extended data point is assigned the second occupancy probability.

6. The method according to claim 5, wherein the first, second, third and fourth extended data points are respectively at a predetermined distance from the first data point, and the fifth extended data point is at a random distance from the first data point.

7. The method according to claim 5, wherein the first occupancy probability, the second occupancy probability, the third occupancy probability, the fourth occupancy probability and the fifth occupancy probability are 0.5, 0, 1, 0.25 and 0.75, respectively.

8. The method according to one of claims 1 to 7, further comprising:

   generating predicted intensity values of the first data point and each data point of the at least portion of the extended data points by the occupancy decoder based on the second feature vectors of the first data point and each data point of the extended data points of the second data point set;
   wherein, updating the learnable parameters of the backbone network comprises: updating the learnable parameters of the backbone network based on the predetermined intensity values and predicted intensity values of the first data point and each data point of the at least portion of the extended data points of the second data point set.

9. The method according to claim 8, wherein the intensity value of each extended data point in the at least portion of the extended data points is determined based on the intensity value of the first data point corresponding to the extended data point.

10. The method according to one of claims 1 to 7, wherein generating the second feature vectors for the first data point and the corresponding plurality of extended data points respectively based on the first feature vector of the first data point generated by the backbone network comprises:
    generating second feature vectors for the first data point and the corresponding plurality of extended data points respectively based on the first feature vector of the first data point and the positions of the first data point and the corresponding plurality of extended data points.

11. The method according to claim 10 , wherein generating the second feature vectors for the first data point and the corresponding plurality of extended data points respectively based on the first feature vector of the first data point generated by the backbone network comprises:

    generating second feature vectors for the first data point and the corresponding plurality of extended data points respectively by combining the first feature vector of the first data point with the positions of the first data point and the corresponding plurality of extended data points respectively; or
    generating second feature vectors for the first data point and the corresponding plurality of extended data points respectively by combining the first feature vector of the first data point with the positions of the first data point and the corresponding plurality of extended data points and the difference between the positions of the first data points respectively.

12. The method according to one of claims 1 to 7, further comprising: for each first data point in the second data point set, determining the data points in the second data point set within a predetermined range comprising the first data point as a corresponding second data point subset, thereby obtaining a plurality of second data point subsets corresponding to each first data point in the second data point set respectively,
    wherein updating the learnable parameters of the backbone network based on the predetermined occupancy probabilities and predicted occupancy probabilities of the first data point and each data point of the extended data points of the second data point set comprises: updating the learnable parameters of the backbone network based on the predetermined occupancy probability and the predicted occupancy probability of each data point in each second data point subset of the plurality of second data point subsets.

13. The method according to one of claims 1 to 7, wherein the three-dimensional point cloud is a LiDAR three-dimensional point cloud.

14. A method for training a neural network model for performing a downstream task based on three-dimensional point cloud data is provided, comprising:

    pre-training a backbone network in the neural network model by the method according to one of claims 1 to 13;
    encoding a data point set in the three-dimensional point cloud into a feature vector set by the pre-trained backbone network;
    generating a prediction result of the downstream task by the downstream task subnetwork in the neural network model based on the feature vector set;

updating the learnable parameters of the downstream task subnetwork based on the prediction result.

15. The method according to claim 14, wherein the neural network model that performs the downstream task comprises a neural network model that performs a point cloud segmentation task or a neural network model that performs an object recognition task.

16. An apparatus for pre-training a backbone network module for encoding three-dimensional point cloud data into feature vectors, comprising:

a backbone network module encoding a first data point set in a three-dimensional point cloud into a first feature vector set, wherein each first data point in the first data point set corresponds to each first feature vector in the first feature vector set respectively;

a training data generation module generating a corresponding plurality of extended data points based on each first data point in the first data point set to obtain a second data point set, wherein the second data point set comprises the first data point and the extended data points, and for each first data point and the corresponding plurality of extended data points in the second data point set:

assigning predetermined occupancy probabilities to the first data point and the corresponding plurality of extended data points, respectively, wherein the assigned predetermined occupancy probabilities comprise at least different first occupancy probabilities, second occupancy probabilities and third occupancy probabilities;

generating second feature vectors for the first data point and the corresponding plurality of extended data points respectively based on the first feature vector of the first data point generated by the backbone network;

an occupancy decoder module generating predicted occupancy probabilities of the first data point and each data point of the extended data points based on the second feature vectors of the first data point and each data point of the extended data points of the second data point set;

a parameter update module updating the learnable parameters of the backbone network module based on the predetermined occupancy probabilities and predicted occupancy probabilities of the first data point and each data point of the extended data points of the second data point set.

17. A computer system for training a neural network model, comprising:
one or more processing units, when executing program instructions, configured to perform the method according to one of claims 1 to 15.

18. A machine-readable storage medium having executable instructions stored thereon, the instructions, when executed, causing one or more processors to perform the method according to any one of claims 1 to 15.

19. A computer program product comprising executable instructions that, when executed, cause one or more processors to perform the method according to any one of claims 1 to 15.

**FIG. 1**

**FIG. 2**

**FIG. 3**

**FIG. 4**

*500*

| |
|:---:|
| 510 |

| |
|:---:|
| 520 |

| |
|:---:|
| 530 |

| |
|:---:|
| 540 |

| |
|:---:|
| 550 |

**FIG. 5**

*600*

| |
|:---:|
| 610 |

| |
|:---:|
| 620 |

| |
|:---:|
| 630 |

| |
|:---:|
| 640 |

**FIG. 6**

| 710 | 720 | 730 | 740 |
|:---:|:---:|:---:|:---:|

*700*

**FIG. 7**

| 810 | 820 |
|:---:|:---:|

*800*

**FIG. 8**

Europäisches
Patentamt

European
Patent Office

Office européen
des brevets

# EUROPEAN SEARCH REPORT

**Application Number**

EP 25 18 2224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOULCH ALEXANDRE ET AL: "ALSO: Automotive Lidar Self-Supervision by Occupancy Estimation", 2023 IEEE/CVF CONFERENCE ON COMPUTER VISION AND PATTERN RECOGNITION (CVPR), IEEE, 17 June 2023 (2023-06-17), pages 13455-13465, XP034402105, DOI: 10.1109/CVPR52729.2023.01293 [retrieved on 2023-08-22] * page 13455 - page 13459 * | 1-19 | INV. G06N3/0455 G06N3/0464 G06N3/0895 G06N3/09 G06V10/82 G06V20/56 |
| | ----- | | |
| | | | **TECHNICAL FIELDS SEARCHED (IPC)** |
| | | | G06N G06F G06V |

The present search report has been drawn up for all claims

| Place of search | Date of completion of the search | Examiner |
|---|---|---|
| The Hague | 28 October 2025 | Bohn, Patrice |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)